(19) Europäisches Patentamt
European Patent Office
Office européen des brevets

(11) EP 4 503 169 A1

(12) **EUROPEAN PATENT APPLICATION**
published in accordance with Art. 153(4) EPC

(43) Date of publication:
05.02.2025 Bulletin 2025/06

(21) Application number: 23881823.1

(22) Date of filing: 24.10.2023

(51) International Patent Classification (IPC):
$H01M\ 4/13^{(2010.01)}$     $H01M\ 4/62^{(2006.01)}$
$H01M\ 10/0525^{(2010.01)}$

(52) Cooperative Patent Classification (CPC):
Y02E 60/10

(86) International application number:
PCT/CN2023/126154

(87) International publication number:
WO 2024/088245 (02.05.2024 Gazette 2024/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 24.10.2022 CN 202211304040
23.10.2023 CN 202311376095

(71) Applicant: Zhuhai CosMX Battery Co., Ltd.
Zhuhai, Guangdong 519180 (CN)

(72) Inventors:
• ZHANG, Jian
Zhuhai, Guangdong 519180 (CN)
• PENG, Chong
Zhuhai, Guangdong 519180 (CN)
• LI, Junyi
Zhuhai, Guangdong 519180 (CN)

(74) Representative: Murgitroyd & Company
Murgitroyd House
165-169 Scotland Street
Glasgow G5 8PL (GB)

(54) **POSITIVE SHEET AND LITHIUM ION BATTERY**

(57) The present disclosure provides a positive electrode plate and a lithium-ion battery. The positive electrode plate provided in the present disclosure includes a positive electrode active layer, and a protective electrode protective layer arranged between a positive electrode current collector and the positive electrode active layer; the positive electrode protective layer includes conductive particles and a binder; and the conductive particles are an inorganic filler with a conductive coating layer on a surface. In the positive electrode plate provided in the present disclosure, the positive electrode protective layer is arranged to avoid a contact-type short circuit between the positive electrode current collector and a negative electrode active layer when a lithium-ion battery is mechanically abused. In addition, there is a wide conductive network in the positive electrode protective layer, so that the lithium-ion battery has excellent safety performance and cycling performance.

FIG. 1

**Description**

**FIELD OF THE INVENTION**

The present disclosure pertains to the field of lithium-ion batteries, and relates to a positive electrode plate and a lithium-ion battery.

**BACKGROUND OF THE INVENTION**

When a lithium-ion battery is mechanically abused (for example, in the case of nail penetration or extrusion), a failure probability is very high. This is because that when the battery is mechanically damaged, a serious short circuit may occur inside the battery, for example, a contact-type short circuit between a positive electrode current collector and a negative electrode current collector, a contact-type short circuit between the positive electrode current collector and a negative electrode active layer, a contact-type short circuit between a positive electrode active layer and the negative electrode current collector, and a contact-type short circuit between the positive electrode active layer and a negative electrode coating layer. When there is a contact-type short circuit between the positive electrode current collector and the negative electrode active layer, heat production is the fastest, and thermal runaway is most likely to occur. In a conventional technology, a protective layer including an inorganic filler, a conductive agent, and a binder is usually arranged on a surface of the positive electrode current collector to avoid a contact-type short circuit between the positive electrode current collector of the battery and the negative electrode active layer. However, content of the conductive agent in the protective layer is generally low, and the conductive agent is easy to agglomerate and difficult to disperse evenly in the protective layer. Consequently, it is impossible to improve safety performance of the battery without affecting cycling performance of the battery. Therefore, how to improve the cycling performance of the lithium-ion battery while ensuring good safety performance of the battery is a technical problem that needs to be resolved urgently in this field.

**BRIEF DESCRIPTION OF THE INVENTION**

The present disclosure provides a positive electrode plate. The positive electrode plate is provided with a positive electrode protective layer to avoid a contact-type short circuit between a positive electrode current collector and a negative electrode active layer when a lithium-ion battery is mechanically abused. In addition, there is a wide conductive network in the positive electrode protective layer, so that the lithium-ion battery has excellent safety performance and cycling performance.
The present disclosure further provides a lithium-ion battery. The battery includes the foregoing positive electrode plate, and therefore has good safety performance and cycling performance.
A first aspect of the present disclosure provides a positive electrode plate, including a positive electrode current collector, a positive electrode active layer, and a positive electrode protective layer arranged between the positive electrode current collector and the positive electrode active layer. The positive electrode active layer includes conductive particles and a binder, where the conductive particles are an inorganic filler with a conductive coating layer on a surface.
It may be understood that arrangement of the positive electrode protective layer can significantly improve safety performance of a battery when the battery is mechanically abused, but at the same time, the positive electrode protective layer affects an energy density of the battery. Therefore, depending on different requirements of the battery, the positive electrode active layer may be arranged on one side of the positive electrode current collector or both sides of the positive electrode current collector.
The positive electrode current collector in the present disclosure can be a current collector commonly used in the art, for example, an aluminum foil or charcoal-coated aluminum foil, and is usually obtained through commercial purchase.
The positive electrode protective layer in the present disclosure includes conductive particles and a binder, and the conductive particles are an inorganic filler with a conductive coating layer on a surface, where the inorganic filler features a high mechanical strength, good stability, and good heat resistance. When the battery is mechanically abused (for example, in the case of nail penetration or extrusion), the inorganic filler can protect the positive electrode current collector well and prevent the positive electrode current collector from being exposed, thereby reducing a probability of a short circuit between the positive electrode current collector and the negative electrode active layer, and improving the safety performance of the battery. The binder is also an essential component for ensuring that the positive electrode protective layer can be reliably bonded to the positive electrode protective layer. Preferably, the positive electrode protective layer in the present invention includes a conductive material and a binder.
The conductive particles used in the present disclosure are provided with a good conductive network of the positive electrode protective layer by coating a conductive layer on the surface of the inorganic filler, and excellent dispersion performance of the inorganic filler also brings good dispersion performance to the conductive particles with a function of conducting electricity, so that the battery can obtain excellent safety performance and good cycling performance.

Further, a material of the conductive coating layer is at least one of ATO, FTO, ITO, or a carbon material; further, the material is preferably at least one of ATO, FTO, or ITO; and still further, the material is preferably ATO.

ATO is antimony-doped tin dioxide, FTO is fluorine-doped tin dioxide, and ITO is tin-doped indium oxide.

Among conventional conductive materials, application of carbon black is limited because of dark color and poor dispersion, and cheap metal conductive materials such as copper, iron, and aluminum are prone to oxidation, and conductivity decreases over time, while nano conductive materials such as ATO, FTO, and ITO have better dispersion and stability, and therefore have obvious advantages over the conventional conductive materials.

Further, in the present disclosure, a percentage of antimony doped in ATO is less than or equal to 30%, a percentage of fluorine doped in FTO is less than or equal to 10%, and a percentage of tin doped in ITO is less than or equal to 30%. Taking ATO as an example, the percentage of antimony doped in ATO indicates mass content of antimony in ATO.

The inorganic filler in the present disclosure is a lithium transition metal oxide and/or a ceramic material, and is specifically at least one of aluminum oxide, magnesium oxide, titanium oxide, nickel oxide, silicon oxide, boehmite, cobalt oxide, iron phosphate, lithium iron phosphate, lithium nickel-cobalt-manganese oxide, or lithium iron manganese phosphate.

The present disclosure does not impose any special limitation on a type of the binder, provided that the positive electrode protective layer and the positive electrode current collector are effectively bonded. The binder in the present disclosure may be at least one of polyvinylidene fluoride (PVDF), acrylic modified PVDF, polyacrylate polymers, polyimide, styrene-butadiene rubber, or styrene acrylic rubber.

In the present disclosure, mass content of the conductive coating layer in the conductive particles can be controlled, so that the lithium-ion battery has good conductivity and excellent safety performance. After exploratory experiments, the inventors have found that when the conductive coating layer accounts for 2% to 40% of the conductive particles (for example, 2%, 5%, 10%, 30%, or 40%), the battery has a relatively balanced safety performance and cycling performance, and further, the mass content preferably accounts for 10% to 30% of the conductive particles.

Considering the safety performance and cycling performance of the lithium-ion battery, the present disclosure also limits the content of conductive particles and the content of the binder in the positive electrode protective layer. Specifically, in terms of mass content, the conductive particles account for 70% to 98% (for example, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, or 98%) of the positive electrode protective layer, and the binder accounts for 2% to 30% (for example, 2%, 3%, 4%, 5%, 6%, 7%, 8%, 9%, 10%, 11%, 12%, 13%, 14%, 15%, 16%, 17%, 18%, 19%, or 20%) of the positive electrode protective layer.

It may be understood that arrangement of the positive electrode protective layer also increases impedance of the battery. To avoid the increase in the impedance of the battery, the inventors have found that when the resistance of the positive electrode protective layer ranges from 0.01 Ω to 2 Ω and is further preferably ranges from 0.1 Ω to 1 Ω, the battery can still maintain good cycling performance.

Specifically, the resistance of the positive electrode protective layer can be controlled by selecting conductive particles with different resistivity and controlling the content of conductive particles in the positive electrode protective layer.

In some specific embodiments, factors such as the type of conductive coating material, the mass content of the conductive coating layer in the conductive particles, and the like can be adjusted to control the resistivity of conductive particles to range from 1Ω·cm to 100Ω·cm, for example, is 1.5 Ω·cm, 2 Ω·cm, 2.5 Ω·cm, 3 Ω·cm, 3.5 Ω·cm, 4 Ω·cm, 4.5 Ω·cm, 5.5 Ω·cm, 6 Ω·cm, 6.5 Ω·cm, 7 Ω·cm, 7.5 Ω·cm, 8 Ω·cm, 8.5 Ω·cm, 9 Ω·cm, 9.5 Ω·cm, 10 Ω·cm, 11 Ω·cm, 12 Ω·cm, 13 Ω·cm, 14 Ω·cm, 15 Ω·cm, 16 Ω·cm, 17 Ω·cm, 18 Ω·cm, 19 Ω·cm, 20 Ω·cm, 30 Ω·cm, 40 Ω·cm, 50 Ω·cm, 60 Ω·cm, 70 Ω·cm, 80 Ω·cm, 90 Ω·cm, or 100 Ω·cm.

The inventors have further found that smaller conductive particles are more conducive to the thin coating of the positive electrode protective layer on the positive electrode current collector, and the conductive particles can be more densely distributed on the positive electrode protective layer, so that the lithium-ion battery has good energy density and safety performance. In some specific embodiments, an average particle size of the conductive particles in the present disclosure ranges from 0.05 μm to 5 μm (for example, is 0.05 μm, 0.06 μm, 0.07 μm, 0.08 μm, 0.09 μm, 0.1 μm, 0.2 μm, 0.3 μm, 0.4 μm, 0.5 μm, 0.6 μm, 0.7 μm, 0.8 μm, 0.9 μm, 1 μm, 2 μm, 3 μm, 4 μm, 5 μm, 6 μm, 7 μm, or 8 μm), and preferably ranges from 0.1 μm to 1μm.

In addition to the conductive particles and the binder, the positive electrode protective layer in the present disclosure may further include a few ceramic particles and a conductive agent. The ceramic particles can further ensure anti-penetration performance of the positive electrode protective layer and improve the safety performance of the battery. The conductive agent can increase the conductive network of the positive electrode protective layer and improve the cycling performance of the battery. Specifically, the ceramic particles can be aluminum oxide, and the conductive agent may be carbon nanotubes. An addition amount of the ceramic particles does not exceed 40 wt%, and an addition amount of the conductive agent does not exceed 2 wt%. When the addition amount of the ceramic particles exceed the foregoing range, the safety performance of the battery is improved, but the conductivity of the battery decreases. When the addition content of the conductive agent exceeds the foregoing range, the conductivity of the battery increases, but the conductive particles are more likely to agglomerate, which is not conducive to obtaining the best safety performance.

As the thickness of the positive electrode protective layer increases, the safety performance of the lithium-ion battery can be improved accordingly, but the volumetric energy density of the battery also decreases. To ensure both the safety performance and the volumetric energy density of the lithium-ion battery, the thickness of the positive electrode protective layer can be set to range from 1 $\mu$m to 10 $\mu$m (for example, is 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, or 10 $\mu$m), and preferably ranges from 2 $\mu$m to 5 $\mu$m.

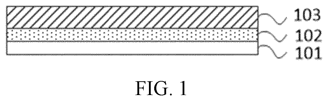

FIG. 1 is a schematic diagram of a structure of a positive electrode plate according to an embodiment of the present disclosure. As shown in FIG. 1, in a specific embodiment, the positive electrode plate in the present disclosure includes a positive electrode current collector 101, a positive electrode protective layer 102, and a positive electrode active layer 103 that are sequentially laminated. The positive electrode protective layer 102 is arranged on a surface of the positive electrode current collector 101, and the positive electrode active layer 103 is arranged on a functional surface of the positive electrode protective layer 102 away from the positive electrode current collector 101.

Further, in this embodiment, when a peeling force between the positive electrode protective layer 102 and the positive electrode current collector 101 is greater than a peeling force between the positive electrode protective layer 102 and the positive electrode active layer 103, a possibility of a short circuit in the battery caused by contact between the positive electrode current collector and the negative electrode active layer can be further reduced.

Specifically, when types of binders in the positive electrode protective layer and the positive electrode active layer are the same, content of the binder in the positive electrode protective layer may be controlled to be greater than content of the binder in the positive electrode active layer, to ensure that the peeling force between the positive electrode protective layer and the positive electrode current collector is greater than the peeling force between the positive electrode protective layer and the positive electrode active layer.

When content of the binder in the positive electrode protective layer and content of the binder in the positive electrode active layer are the same, a binder with relatively stronger adhesion may be added to the positive electrode protective layer, and a binder with relatively weaker adhesion may be added to the positive electrode active layer, to ensure that the peeling force between the positive electrode protective layer and the positive electrode current collector is greater than the peeling force between the positive electrode protective layer and the positive electrode active layer.

The present disclosure does not impose any special limitation on components of the positive electrode active layer, and the positive electrode active layer may include components such as a positive electrode active material, a conductive agent, and a binder according to conventional composition in the art. The components such as the positive electrode active material, the conductive agent, and the binder may be conventional substances in the art. For example, the positive electrode active material may be one or more of lithium cobalt oxide, lithium nickel-cobalt-manganese oxide, lithium iron manganese phosphate, lithium iron phosphate, or lithium manganese oxide. The conductive agent may be one or more of conductive carbon black, carbon nanotubes, conductive graphite, or graphene. The binder may be one or more of polyvinylidene fluoride (PVDF), acrylic modified PVDF, polyacrylate polymers, polyimide, styrene-butadiene rubber, or styrene acrylic rubber.

The positive electrode plate in the present disclosure can also be prepared by using a conventional technical means in the art. In a specific embodiment, raw materials of the positive electrode protective layer can be evenly dispersed in a solvent to obtain slurry of the positive electrode protective layer, and raw materials of the positive electrode active layer may be evenly dispersed in the solvent to obtain a slurry of the positive electrode active layer; the slurry of the positive electrode protective layer is coated on at least one surface of the positive electrode current collector, and the positive electrode protective layer is obtained after drying; and then the slurry of the positive electrode active layer is coated on the positive electrode protective layer, and a positive electrode plate that meets a requirement of the present invention is obtained after drying.

The present disclosure does not specifically limit the coating method, and any coating method such as gravure coating, extrusion coating, spraying, and screen printing can be used for coating of the slurry of the positive electrode protective layer and the slurry of the positive electrode active layer.

A second aspect of the present disclosure provides a lithium-ion battery, where the lithium-ion battery includes the positive electrode plate provided in the first aspect of the present invention. In addition to the positive electrode plate, the lithium-ion battery in the present disclosure further includes a separator, a negative electrode plate, and an electrolyte solution. For composition of the negative electrode plate, refer to the conventional negative electrode plate in the art, and the separator may be a separator commonly used in the art, for example, PP film or PE film.

The lithium-ion battery in the present disclosure can be prepared by using a conventional method in the art. Specifically, the positive electrode plate, the separator, and the negative electrode plate may be sequentially laminated, and then a battery cell can be obtained through a lamination or winding process, and then the lithium-ion battery can be obtained through processes such as oven drying, electrolyte solution injection, formation, and packaging.

In the positive electrode plate in the present disclosure, a positive electrode protective layer including conductive particles and a binder is arranged on a surface of the positive electrode current collector, where the conductive particles are an inorganic filler with a conductive coating layer on a surface, and the inorganic filler features a high mechanical strength, good stability, and good heat resistance. When the battery is mechanically abused (for example, in the case of nail penetration or extrusion), the inorganic filler can protect the positive electrode current collector well and prevent the positive electrode current collector from being exposed, thereby reducing a probability of a short circuit between the positive electrode current collector and the negative electrode active layer, and improving the safety performance of the battery. In addition, because of excellent dispersion performance of the inorganic filler, the conductive particles have good dispersion performance, and therefore there is a wide conductive network in the positive electrode protective layer, so that the lithium-ion battery has excellent safety performance and cycling performance.

The lithium-ion battery in the present disclosure includes the foregoing positive electrode plate, and therefore has excellent safety performance and good cycling performance.

## BRIEF DESCRIPTION OF THE DRAWINGS

FIG. 1 is a schematic diagram of a structure of a positive electrode plate according to an embodiment of the present disclosure.

Description of reference numerals:

101: Positive electrode current collector;
102: Positive electrode protective layer;
103: Positive electrode active layer.

## DETAILED DESCRIPTION OF THE INVENTION

To make objectives, technical solutions, and advantages of the present disclosure clearer, the following clearly and completely describes the technical solutions in embodiments of the present disclosure with reference to embodiments of the present disclosure. Apparently, the described embodiments are some but not all of embodiments of the present disclosure. All other embodiments obtained by persons of ordinary skill in the art based on embodiments of the present disclosure without creative efforts shall fall within the protection scope of the present disclosure.

The following describes in detail the positive electrode plate and the lithium-ion battery in the present disclosure based on specific embodiments.

Preparation Example 1

This preparation example is used for preparation of conductive particles. Details are shown below.

Material of the conductive coating layer: ATO with a doping amount of antimony of 15%.

Inorganic filler: $TiO_2$.

An average particle size of ATO-coated $TiO_2$ conductive particles was 0.4 $\mu$m, a proportion of ATO in the conductive particles was 10 wt%, and an obtained resistivity ($\Omega \cdot cm$) of the conductive particles was 20 $\Omega \cdot cm$.

Preparation Example 2

Preparation Example 2 was carried out with reference to Preparation Example 1. A difference was that a type of the inorganic filler was changed, as shown below.

In Preparation Example 2a, the inorganic filler was $Al_2O_3$.

In Preparation Example 2b, the inorganic filler was ZnO.

In Preparation Example 2c, the inorganic filler was $SiO_2$.

In Preparation Example 2d, the inorganic filler was $MnO_2$.

In Preparation Example 2e, the inorganic filler was lithium iron phosphate.

For details, refer to Table 1.

Preparation Example 3

Preparation example 3 was carried out with reference to Preparation Example 1. A difference was that a type of the material of the conductive coating layer or a type of the inorganic filler was changed, as shown below.

In Preparation Example 3a, the material of the conductive coating layer was carbon nanotubes, and the inorganic filler was $Al_2O_3$.

In Preparation Example 3b, the material of the conductive coating layer was carbon nanotubes, and the inorganic filler was $SiO_2$.

In Preparation Example 3c, the material of the conductive coating layer was carbon nanotubes, and the inorganic filler was lithium iron phosphate.

In Preparation Example 3d, the material of the conductive coating layer was FTO with a doping amount of antimony of 5%, and the inorganic filler was not changed.

In Preparation Example 3e, the material of the conductive coating layer was ITO with a doping amount of antimony of 15%, and the inorganic filler was not changed.

For details, refer to Table 1.

Preparation Example 4

Preparation Example 4 was carried out with reference to Preparation Example 1. A difference was that a percentage of the conductive coating layer in the conductive particles was changed, as shown below.

In Preparation Example 4a, a percentage of ATO in the conductive particles was 5 wt%, and an obtained resistivity ($\Omega \cdot cm$) of the conductive particles was 45.3 $\Omega \cdot cm$.

In Preparation Example 4b, a percentage of ATO in the conductive particles was 20 wt%, and an obtained resistivity ($\Omega \cdot cm$) of the conductive particles was 9.2 $\Omega \cdot cm$.

In Preparation Example 4c, a percentage of ATO in the conductive particles was 30 wt%, and an obtained resistivity ($\Omega \cdot cm$) of the conductive particles was 6.1 $\Omega \cdot cm$.

In Preparation Example 4d, a percentage of ATO in the conductive particles was 40 wt%, and an obtained resistivity ($\Omega \cdot cm$) of the conductive particles was 2.4 $\Omega \cdot cm$.

In Preparation Example 4e, a percentage of ATO in the conductive particles was 60 wt%, and an obtained resistivity ($\Omega \cdot cm$) of the conductive particles was 0.8 $\Omega \cdot cm$.

For details, refer to Table 1.

Preparation Example 5

Preparation Example 5 was carried out with reference to Preparation Example 1. A difference was that an average particle size of the conductive particles was changed, as shown below.

In Preparation Example 5a, the average particle size of the conductive particles was 2 $\mu m$.

In Preparation Example 5b, the average particle size of the conductive particles was 8 $\mu m$.

For details, refer to Table 1.

Table 1

| Group | Inorganic filler | Conductive coating layer | Percentage of the coating layer in the conductive particles (%) | Average particle size of the conductiv e particles ($\mu m$) |
|---|---|---|---|---|
| Preparation Example 1 | $TiO_2$ | ATO with a doping amount of antimony of 15% | 10 | 0.4 |
| Preparation Example 2a | $Al_2O_3$ | ATO with a doping amount of antimony of 15% | 10 | 0.4 |
| Preparation Example 2b | ZnO | ATO with a doping amount of antimony of 15% | 10 | 0.4 |
| Preparation Example 2c | $SiO_2$ | ATO with a doping amount of antimony of 15% | 10 | 0.4 |
| Preparation Example 2d | $MnO_2$ | ATO with a doping amount of antimony of 15% | 10 | 0.4 |

(continued)

| Group | Inorganic filler | Conductive coating layer | Percentage of the coating layer in the conductive particles (%) | Average particle size of the conductiv e particles ($\mu$m) |
|---|---|---|---|---|
| Preparation Example 2e | lithium iron phosphate | ATO with a doping amount of antimony of 15% | 10 | 0.4 |
| Preparation Example 3a | $Al_2O_3$ | Carbon nanotubes | 10 | 0.4 |
| Preparation Example 3b | $SiO_2$ | Carbon nanotubes | 10 | 0.4 |
| Preparation Example 3c | Iron phosphate | Carbon nanotubes | 10 | 0.4 |
| Preparation Example 3d | $TiO_2$ | FTO with a doping amount of fluorine of 5% | 10 | 0.4 |
| Preparation Example 3e | $TiO_2$ | ITO with a doping amount of tin of 15% | 10 | 0.4 |
| Preparation Example 4a | $TiO_2$ | ATO with a doping amount of antimony of 15% | 5 | 0.4 |
| Preparation Example 4b | $TiO_2$ | ATO with a doping amount of antimony of 15% | 20 | 0.4 |
| Preparation Example 4c | $TiO_2$ | ATO with a doping amount of antimony of 15% | 30 | 0.4 |
| Preparation Example 4d | $TiO_2$ | ATO with a doping amount of antimony of 15% | 40 | 0.4 |
| Preparation Example 4e | $TiO_2$ | ATO with a doping amount of antimony of 15% | 60 | 0.4 |
| Preparation Example 5a | $TiO_2$ | ATO with a doping amount of antimony of 15% | 10 | 2 |
| Preparation Example 5b | $TiO_2$ | ATO with a doping amount of antimony of 15% | 10 | 8 |

Example 1

The conductive particles prepared in Preparation Example 1 were used to prepare the positive electrode plate in this example. Specific steps include:

(1) 96 wt% lithium cobalt oxide, 1 wt% carbon black, 1 wt% carbon nanotubes, and 2 wt% PVDF were mixed, and added with NMP, and the slurry of the positive electrode active layer with a solid content of 70% was obtained after stirring.

(2) 95 wt% conductive particles obtained in Preparation Example 1 were mixed with 5 wt% PVDF, and added with NMP, and the slurry of the positive electrode protective layer with a solid content of 40% was obtained after stirring.

(3) The slurry of the positive electrode protective layer prepared in step (2) was coated on two functional surfaces of an aluminum foil (with a thickness of 9 μm), and the positive electrode protective layer was obtained after drying; and the slurry of the positive electrode active layer prepared in step (1) was coated on the positive electrode protective layer to obtain a positive electrode plate.

The positive electrode plate was rolled with a roller press, so that the single-side thickness of the positive electrode protective layer was rolled to 3 μm, and the single-side thickness of the positive electrode active layer was rolled to 45 μm. Then the positive electrode plate was slit by using a slitting machine. Finally, the positive tab was soldered onto the positive electrode plate, and the protective adhesive paper was pasted to obtain the positive electrode plate. For details, refer to Table 2.

Examples 2 to 5

The preparation steps of the positive electrode plate in Examples 2 to 5 were basically the same as those in Example 1. A difference was that the conductive particles prepared in Example 1 were respectively replaced by the conductive particles prepared in Examples 2 to 5. For details, refer to Table 2.

Example 6

The preparation steps of the positive electrode plate in Example 6 were basically the same as those in Example 1. A difference lied in a percentage of the conductive particles in the positive electrode protective layer. For details, refer to Table 2.

Example 7

The preparation steps of the positive electrode plate in Example 7 were basically the same as those in Example 1. A difference lied in a thickness of the protective layer. For details, refer to Table 2.

Comparative Example 1

The preparation steps of the positive electrode plate in this comparative example are as follows:

(1) 96 wt% lithium cobalt oxide, 1 wt% carbon black, 1 wt% carbon nanotubes, and 2 wt% PVDF were mixed, and added with NMP, and the slurry of the positive electrode active layer with a solid content of 70% was obtained after stirring.

(2) Slurry of the positive electrode active layer obtained in step (1) was coated on the upper and lower surfaces of an aluminum foil (with a thickness of 9 μm) through the process of extrusion coating, and the positive electrode plate was obtained after drying.

The positive electrode plate was rolled with a roller press, so that the single-side thickness of the positive electrode active layer was rolled to 45 μm; then the positive electrode plate was slit by using a slitting machine; and finally, the negative tab was soldered onto the positive electrode plate, and the protective adhesive paper was pasted to obtain the positive electrode plate. For details, refer to Table 2.

Comparative Example 2

This comparative example 1 was carried out with reference to Example 1. A difference was that in the preparation of the positive electrode plate, no conductive coating layer was arranged on the surface of the conductive particles, the inorganic filler was $TiO_2$, and the slurry of the positive electrode protective layer obtained from the inorganic filler directly forms the positive electrode protective layer. For details, refer to Table 2.

Comparative Example 3

This comparative example 1 was carried out with reference to Example 1. A difference was that in the preparation of the positive electrode plate, no conductive coating layer was arranged on the surface of the conductive particles, the inorganic filler was $TiO_2$, carbon nanotubes were added to the inorganic filler, and the carbon nanotubes and the inorganic filler were mixed in an ordinary way to obtain the slurry of the positive electrode protective layer, where percentages of the components in the positive electrode protective layer were 85.5 wt% $TiO_2$ + 9.5% carbon nanotubes + 5 wt% PVDF. For details, refer to Table 2.

Comparative Example 4

This comparative example 1 was carried out with reference to Example 1. A difference was that in the preparation of the positive electrode plate, no conductive coating layer was arranged on the surface of the conductive particles, the inorganic filler was $TiO_2$, ATO with a doping amount of antimony of 15% was added to the inorganic filler, and ATO and the inorganic filler were mixed in an ordinary way to obtain the slurry of the positive electrode protective layer, where percentages of the components in the positive electrode protective layer were 85.5 wt% $TiO_2$ + 9.5% ATO + 5 wt% PVDF. For details, refer to Table 2.

Test Example 1

The resistance of the positive electrode protective layer in the foregoing examples and comparative examples was tested. The test method was as follows: The positive electrode current collector was placed on a bulk phase resistance tester (the diameter of the detection probe of the bulk phase resistance tester was 15 mm), and it was determined that the resistance of the positive electrode current collector was R1; then the positive electrode current collector with the positive electrode protective layer was placed on the bulk phase resistance tester, and the overall resistance R2 of the positive electrode protective layer and the positive electrode current collector was determined, where the resistance of the positive electrode protective layer was R = R2-R1.
Table 2 shows the test results.

Table 2

| Group | Percentage of conductive particles in the positive electrode protective layer (%) | Percentage of a binder in the positive electrode protective layer (%) | Thickness ($\mu$m) of the positive electrode protective layer | Resistance of the positive electrode protective layer ($\Omega$) |
|---|---|---|---|---|
| Example 1 | 95 | 5 | 3 | 0.2 |
| Example 2a | 95 | 5 | 3 | 0.195 |
| Example 2b | 95 | 5 | 3 | 0.198 |
| Example 2c | 95 | 5 | 3 | 0.202 |
| Example 2d | 95 | 5 | 3 | 0.205 |
| Example 2e | 95 | 5 | 3 | 0.19 |
| Example 3a | 95 | 5 | 3 | 0.232 |
| Example 3b | 95 | 5 | 3 | 0.231 |
| Example 3c | 95 | 5 | 3 | 0.235 |
| Example 3d | 95 | 5 | 3 | 0.25 |
| Example 3e | 95 | 5 | 3 | 0.245 |
| Example 4a | 95 | 5 | 3 | 0.456 |
| Example 4b | 95 | 5 | 3 | 0.102 |
| Example 4c | 95 | 5 | 3 | 0.075 |
| Example 4d | 95 | 5 | 3 | 0.032 |
| Example 4e | 95 | 5 | 3 | 0.009 |
| Example 5a | 95 | 5 | 3 | 0.2 |
| Example 5b | 95 | 5 | 3 | 0.8 |
| Example 6a | 98 | 2 | 3 | 0.189 |
| Example 6b | 90 | 10 | 3 | 0.22 |
| Example 6c | 80 | 20 | 3 | 0.253 |

(continued)

| Group | Percentage of conductive particles in the positive electrode protective layer (%) | Percentage of a binder in the positive electrode protective layer (%) | Thickness ($\mu$m) of the positive electrode protective layer | Resistance of the positive electrode protective layer ($\Omega$) |
|---|---|---|---|---|
| Example 6d | 70 | 30 | 3 | 0.286 |
| Example 6e | 90 (+5%$Al_2O_3$) | 5 | 3 | 0.23 |
| Example 6f | 40 (+55%$Al_2O_3$) | 5 | 3 | 0.55 |
| Example 6g | 94.5 (+0.5% carbon nanotubes) | 5 | 3 | 0.168 |
| Example 7a | 95 | 5 | 1 | 0.06 |
| Example 7b | 95 | 5 | 2 | 0.13 |
| Example 7c | 95 | 5 | 4 | 0.28 |
| Example 7d | 95 | 5 | 5 | 0.31 |
| Example 7e | 95 | 5 | 0.5 | 0.04 |
| Example 7f | 95 | 5 | 15 | 1 |
| Comparative Example 1 | / | / | 0 | / |
| Comparative Example 2 | 95 | 5 | 3 | >10 |
| Comparative Example 3 | 85.5 (+9.5% carbon nanotubes) | 10 | 3 | 0.005 |
| Comparative Example 4 | 85.5 (+9.5% ATO) | 10 | 3 | 0.5 |

A lithium-ion battery is prepared based on the positive electrode plate obtained in the foregoing examples and comparative examples. Specific steps include:

(1) 96 wt% artificial graphite, 1 wt% carbon black, 1.5 wt% carbon nanotubes, and 1.5 wt% sodium carboxymethyl cellulose were mixed, and added with deionized water, and the slurry of the positive electrode active layer with a solid content of 40% was obtained after stirring.

(2) The slurry of the negative electrode active layer obtained in step (1) was coated on the upper and lower surfaces of copper foil (with a thickness of 5 $\mu$m) through the process of extrusion coating, and the negative electrode plate was obtained after oven drying.
The negative electrode plate was rolled with a roller press; then the negative electrode plate was slit by using a slitting machine; and finally, the negative tab was soldered onto the negative electrode plate, and the protective adhesive paper was pasted.

(3) A separator was placed between the positive electrode plate obtained in the foregoing examples and comparative examples and the negative electrode plate obtained in step (2) for winding to obtain a jellyroll.

(4) The aluminum-plastic film was punched using a punching die; the punched aluminum-plastic film was used to package the jellyroll to obtain a battery cell; oven drying was performed until the moisture was qualified; and then the electrolyte solution was injected.

(5) A piece of lithium-ion battery formation equipment was used to charge and discharge the battery cell, the battery cell was hardened, and the battery cell was sorted based on capacity.

(6) Secondary sealing was performed on the battery cell, and edge folding was performed to obtain the lithium-ion battery in this example.

Test Example 2

The lithium-ion battery prepared based on the positive electrode plate provided in the foregoing examples and comparative examples was tested for a nail penetration test pass rate, a screw extrusion test pass rate, a capacity retention rate, and an energy density. The test results were recorded in Table 3. The test method was as follows:

a. Nail penetration test pass rate

Test method: Fully charge the lithium-ion battery, then put the battery on a test bench of a nail penetration tester, and use a tungsten steel nail with a diameter of 3 mm and a nail tip length of 3.62 mm to pierce the battery from a middle part of the battery at a speed of 100 mm/s. If the battery does not catch fire or explode, the battery passes the test. The nail penetration test pass rate is equal to a passed quantity/a tested quantity; and the tested quantity was 30. For example, if the tested quantity is 30 and the passed quantity is 28, the result is denoted as "28/30".

b. Screw extrusion test pass rate

Test method: Fully charge each lithium-ion battery, and put the lithium-ion battery on a test bench of an extrusion tester; place M2*4 screws (with a screw diameter of 2 mm and a screw length of 4 mm) in the middle of the battery, and then start the extrusion tester, after which an extrusion plate was pressed down at a speed of 100 mm/s; and when the extrusion force reaches 13 KN, stop the test. If the battery does not catch fire or explode, the battery passes the test. The screw extrusion test pass rate is equal to a passed quantity/a tested quantity; and the tested quantity was 30. For example, if the tested quantity is 30 and the passed quantity is 28, the test result is denoted as "28/30".

c. Capacity retention rate

Test method: At 45°C, charge the lithium-ion battery at 1.5C and discharge the battery at 0.5C, and then record the discharge capacity Q2 of the 500th charge and discharge and the discharge capacity Q1 of the first charge and discharge. The capacity retention rate is equal to Q2/Q1 × 100%.

d. Energy density

Test method: Charge the lithium-ion battery to an upper limit voltage of 4.45 V; discharge the battery to a lower limit voltage of 3.0 V at 0.2C (the discharge energy is denoted as E); and then calculate the energy density of the lithium-ion battery by using the following formula:

$$\text{Energy density} = E/(\text{Length} \times \text{Width} \times \text{Height of the lithium-ion battery}).$$

Table 3

| Group | Nail penetration test pass rate (passed quantity/tested quantity) | Screw extrusion test pass rate (passed quantity/tested quantity) | Capacity retention rate (%) | Energy density (Wh/L) |
|---|---|---|---|---|
| Example 1 | 30/30 | 30/30 | 89.2% | 720 |
| Example 2a | 30/30 | 29/30 | 89.8% | 720 |
| Example 2b | 30/30 | 30/30 | 89.7% | 720 |
| Example 2c | 30/30 | 30/30 | 89.3% | 720 |
| Example 2d | 30/30 | 30/30 | 89.1% | 720 |
| Example 2e | 29/30 | 28/30 | 89.7% | 720 |
| Example 3a | 30/30 | 30/30 | 89.1% | 720 |
| Example 3b | 30/30 | 30/30 | 89.2% | 720 |
| Example 3c | 30/30 | 30/30 | 89.0% | 720 |
| Example 3d | 30/30 | 30/30 | 88.3% | 720 |

(continued)

| Group | Nail penetration test pass rate (passed quantity/tested quantity) | Screw extrusion test pass rate (passed quantity/tested quantity) | Capacity retention rate (%) | Energy density (Wh/L) |
|---|---|---|---|---|
| Example 3e | 30/30 | 30/30 | 88.6% | 720 |
| Example 4a | 30/30 | 30/30 | 88.5% | 720 |
| Example 4b | 29/30 | 28/30 | 89.4% | 720 |
| Example 4c | 27/30 | 27/30 | 89.5% | 720 |
| Example 4d | 25/30 | 26/30 | 89.7% | 720 |
| Example 4e | 14/30 | 12/30 | 89.6% | 720 |
| Example 5a | 28/30 | 27/30 | 89.1% | 720 |
| Example 5b | 20/30 | 22/30 | 87.0% | 680 |
| Example 6a | 30/30 | 28/30 | 89.3% | 720 |
| Example 6b | 30/30 | 30/30 | 89.2% | 720 |
| Example 6c | 30/30 | 30/30 | 88.6% | 720 |
| Example 6d | 30/30 | 30/30 | 88.4% | 720 |
| Example 6e | 30/30 | 30/30 | 88.4% | 720 |
| Example 6f | 30/30 | 30/30 | 87.9% | 720 |
| Example 6g | 29/30 | 28/30 | 89.7% | 720 |
| Example 7a | 25/30 | 24/30 | 89.6% | 725 |
| Example 7b | 28/30 | 28/30 | 89.4% | 722 |
| Example 7c | 30/30 | 30/30 | 89.1% | 718 |
| Example 7d | 30/30 | 30/30 | 88.9% | 715 |
| Example 7e | 10/30 | 10/30 | 89.4% | 728 |
| Example 7f | 30/30 | 30/30 | 86.4% | 680 |
| Comparative Example 1 | 0/30 | 0/30 | 89.2% | 730 |
| Comparative Example 2 | 30/30 | 30/30 | Cycling cannot be completed. | 50 |
| Comparative Example 3 | 0/30 | 0/30 | 89.4% | 720 |
| Comparative Example 4 | 30/30 | 30/30 | 56.5% | 720 |

The following conclusions can be drawn from Table 3.

1. A comparison between Example 1 and Comparative Example 1 shows that adding the positive electrode protective layer can significantly improve the safety performance of the battery. A comparison between Example 1 and Comparative Example 2 shows that when no conductive component is included in the positive electrode protective layer, the obtained battery cannot complete cycling. A comparison between Example 1 and Comparative Example 4 shows that when ATO and $TiO_2$ are changed from the coating mode to the mixing mode, the resistance of the electrode plate increases, and the cycling performance of the battery is significantly reduced.

2. A comparison between Example 1 and Examples 4a to 4e shows that as the mass percentage of the conductive coating layer in the conductive particles increases, the nail penetration test pass rate and the screw extrusion test pass rate of the battery decrease slightly, and the safety performance of the battery is reduced; and when the mass percentage of the conductive coating layer in the conductive particles is too low, the cycling performance of the battery is also significantly reduced.

3. A comparison between Example 1 and Examples 7a to 7f shows that the thickness of the positive electrode protective layer affects the energy density of the battery: A larger thickness of the positive electrode protective layer indicates a lower energy density of the battery; and a smaller thickness of the positive electrode protective layer indicates a higher energy density of the battery.

4. A comparison between Example 5a and Example 1 and a comparison between Example 5b and Example 5a show that the average particle size of the conductive particles affects the safety performance of the battery: If the average particle size of the conductive particles is too large, the nail penetration test pass rate and the screw extrusion test pass rate of the battery are significantly reduced, and the safety performance of the battery is reduced.

Finally, it should be noted that the foregoing embodiments are merely intended for describing the technical solutions of the present disclosure, instead of limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of the present disclosure.

**Claims**

1.  A positive electrode plate, **characterized in that** the positive electrode plate comprises a positive electrode current collector, a positive electrode active layer, and a positive electrode protective layer arranged between the positive electrode current collector and the positive electrode active layer, wherein

    the positive electrode protective layer comprises conductive particles and a binder; and
    the conductive particles are an inorganic filler with a conductive coating layer on a surface.

2.  The positive electrode plate according to claim 1, **characterized in that** a material of the conductive coating layer is at least one of ATO, FTO, ITO, or a carbon material.

3.  The positive electrode plate according to claim 1 or 2, **characterized in that** ATO is antimony-doped tin dioxide, FTO is fluorine-doped tin dioxide, and ITO is tin-doped indium oxide; and a percentage of antimony doped in ATO is less than or equal to 30%, a percentage of fluorine doped in FTO is less than or equal to 10%, and a percentage of tin doped in ITO is less than or equal to 30%.

4.  The positive electrode plate according to any one of claims 1 to 3, **characterized in that** the inorganic filler is at least one of aluminum oxide, magnesium oxide, titanium oxide, nickel oxide, silicon oxide, boehmite, cobalt oxide, iron phosphate, lithium iron phosphate, lithium nickel-cobalt-manganese oxide, or lithium iron manganese phosphate.

5.  The positive electrode plate according to any one of claims 1 to 4, **characterized in that** a resistivity of the conductive particles ranges from 1 $\Omega \cdot$cm to 100 $\Omega \cdot$cm.

6.  The positive electrode plate according to any one of claims 1 to 5, **characterized in that** an average particle size of the conductive particles ranges from 0.05 $\mu$m to 5 $\mu$m.

7.  The positive electrode plate according to any one of claims 1 to 6, **characterized in that** a mass of the conductive coating layer accounts for 2% to 40% of a mass of the conductive particles; and preferably, the mass of the conductive coating layer accounts for 10% to 30% of the mass of the conductive particles.

8.  The positive electrode plate according to any one of claims 1 to 7, **characterized in that** the positive electrode protective layer comprises 70% to 98% of conductive particles and 2% to 30% of binder in terms of mass.

9.  The positive electrode plate according to any one of claims 1 to 8, **characterized in that** a resistance of the positive electrode protective layer ranges from 0.01 Ω to 2 Ω.

10. The positive electrode plate according to any one of claims 1 to 9, **characterized in that** a thickness of the positive electrode protective layer ranges from 1 μm to 10 μm.

11. The positive electrode plate according to any one of claims 1 to 10, **characterized in that** the positive electrode protective layer further comprises ceramic particles and a conductive agent, the ceramic particles are aluminum oxide, and the conductive agent is carbon nanotubes.

12. The positive electrode plate according to any one of claims 1 to 11, **characterized in that** the positive electrode protective layer comprises 70% to 98% of conductive particles, 2% to 30% of binder in terms of mass, 0% to 40% of ceramic particles, and 0% to 20% of conductive agent.

13. The positive electrode plate any one of claims 1 to 12, **characterized in that** the positive electrode plate comprises a positive electrode current collector, the positive electrode protective layer, and a protective electrode active layer that are sequentially laminated.

14. The positive electrode plate according to any one of claims 1 to 13, **characterized in that** a peeling force between the positive electrode protective layer and the positive electrode current collector is greater than a peeling force between the positive electrode protective layer and the positive electrode active layer.

15. A lithium-ion battery, **characterized by** comprising the positive electrode plate according to any one of claims 1 to 14.

103
102
101

FIG. 1

<table>
<tr><td colspan="2" align="center"><strong>INTERNATIONAL SEARCH REPORT</strong></td><td>International application No.<br><br>**PCT/CN2023/126154**</td></tr>
</table>

**A. CLASSIFICATION OF SUBJECT MATTER**

H01M4/13(2010.01)i;  H01M4/62(2006.01)i;  H01M10/0525(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; VEN; ENTXT; CNKI: 正极, 保护层, 导电, 包覆, 无机材料, 氧化物, positive, protective layer, conductive, coat, inorganic material, oxide

**C. DOCUMENTS CONSIDERED TO BE RELEVANT**

| Category* | Citation of document, with indication, where appropriate, of the relevant passages | Relevant to claim No. |
|---|---|---|
| E | CN 117039189 A (ZHUHAI COSMX BATTERY CO., LTD.) 10 November 2023 (2023-11-10)<br>       description, paragraphs 3-168 | 1-13, 15 |
| PX | CN 115528209 A (ZHUHAI COSMX BATTERY CO., LTD.) 27 December 2022 (2022-12-27)<br>       description, paragraphs 3-34 and 209-225 | 1-15 |
| X | JP 2015118865 A (TOYOTA INDUSTRIES CORP.) 25 June 2015 (2015-06-25)<br>       description, paragraphs 23-129 | 1-15 |
| X | CN 114156487 A (ZHUHAI COSMX BATTERY CO., LTD.) 08 March 2022 (2022-03-08)<br>       description, paragraphs 27-101 | 1-15 |
| X | CN 114156429 A (ZHUHAI COSMX BATTERY CO., LTD.) 08 March 2022 (2022-03-08)<br>       description, paragraphs 29-95 | 1-15 |
| X | WO 2016072090 A1 (KABUSHIKI KAISHA TOYOTA JIDOSHOKKI) 12 May 2016 (2016-05-12)<br>       description, paragraphs 35-159 and 193-205 | 1-15 |

☑ Further documents are listed in the continuation of Box C.    ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **11 January 2024** | **23 January 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/126154**

**C.    DOCUMENTS CONSIDERED TO BE RELEVANT**

| Category* | Citation of document, with indication, where appropriate, of the relevant passages | Relevant to claim No. |
|---|---|---|
| X | CN 109755468 A (NINGDE CONTEMPORARY AMPEREX TECHNOLOGY CO., LTD.) 14 May 2019 (2019-05-14) <br> description, paragraphs 15-165 | 1-15 |
| A | CN 107706366 A (HEFEI UNIVERSITY OF TECHNOLOGY) 16 February 2018 (2018-02-16) <br> entire document | 1-15 |

Form PCT/ISA/210 (second sheet) (July 2022)

INTERNATIONAL SEARCH REPORT
Information on patent family members

International application No.

**PCT/CN2023/126154**

| Patent document cited in search report | | | Publication date (day/month/year) | Patent family member(s) | | | Publication date (day/month/year) |
|---|---|---|---|---|---|---|---|
| CN | 117039189 | A | 10 November 2023 | None | | | |
| CN | 115528209 | A | 27 December 2022 | None | | | |
| JP | 2015118865 | A | 25 June 2015 | JP | 6120087 | B2 | 26 April 2017 |
| CN | 114156487 | A | 08 March 2022 | None | | | |
| CN | 114156429 | A | 08 March 2022 | None | | | |
| WO | 2016072090 | A1 | 12 May 2016 | JP | WO2016072090 | A1 | 22 June 2017 |
| CN | 109755468 | A | 14 May 2019 | ES | 2821937 | T3 | 28 April 2021 |
| | | | | US | 2019140280 | A1 | 09 May 2019 |
| | | | | US | 11189833 | B2 | 30 November 2021 |
| | | | | EP | 3483907 | A1 | 15 May 2019 |
| | | | | EP | 3483907 | B1 | 09 September 2020 |
| | | | | CN | 109755468 | B | 12 January 2021 |
| | | | | TR | 202018888 | T4 | 21 December 2020 |
| CN | 107706366 | A | 16 February 2018 | None | | | |

Form PCT/ISA/210 (patent family annex) (July 2022)